(19) Europäisches Patentamt

European Patent Office

Office européen des brevets

(11) **EP 1 164 218 A2**

(12) **EUROPEAN PATENT APPLICATION**

(43) Date of publication:
**19.12.2001 Bulletin 2001/51**

(51) Int Cl.7: **D06F 58/28**

(21) Application number: **01305166.9**

(22) Date of filing: **13.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.06.2000 GB 0014743**

(71) Applicant: **Crosslee PLC
Halifax, West Yorkshire HX3 8DE (GB)**

(72) Inventor: **Clay, Paul
Hipperholme, Halifax HX3 8DE (GB)**

(74) Representative: **Robinson, Ian Michael et al
Appleyard Lees, 15 Clare Road
Halifax HX1 2HY (GB)**

(54) **Tumble dryer**

(57) A tumble dryer uses ambient temperature airflow at high volume (e.g. over 150m³/hr) for an extended period (e.g. at least 1 hr per Kg of load). The longer drying cycle and increased flow of ambient temperature air advantageously allow the total energy consumption during a drying cycle to be minimised (e.g. less than 0.5 kwh/Kg).

Fig. 1

EP 1 164 218 A2

**Description**

The present invention relates to a tumble dryer and to a method of operating a tumble dryer.

Known tumble dryer arrangements for drying a load such as laundry comprise a drum for receiving the load, a motor for rotating the drum such that the laundry is agitated and tumbled in use, and means for directing a flow of high-temperature heated air through the drum. The high-temperature heated air promotes the evaporation of water from the load and aids drying. However, a significant problem has been identified in that known tumble dryers are inefficient in terms of energy consumption.

An aim of the present invention is to provide a tumble dryer which is energy efficient. Preferred embodiments of the present invention aim to provide a tumble dryer which is energy efficient, has a low operating noise level, and a low capital cost.

According to the present invention there is provided a tumble dryer comprising a rotatable drum and airflow means for generating an airflow through the drum, characterised in that the airflow means is arranged to provide a flow of ambient temperature air through the drum during a drying cycle.

Preferably, the ambient temperature airflow is maintained for at least a period of the drying cycle sufficient to achieve substantial drying of the load. Ideally the ambient temperature airflow is maintained substantially throughout the drying cycle.

Preferably, the airflow is significantly greater than 150m$^3$/hr. Preferably the airflow is greater than 180m$^3$/hr, further preferably greater than 200m$^3$/hr, and ideally greater than 250m$^3$/hr. In one preferred embodiment the airflow is approximately double the expected value of a prior art dryer, being of the order of 280m$^3$/hr. Preferably, the airflow is applied for at least 1 hour per Kg of load, suitably 1.25 hours per Kg of load and most preferably 1.5 hours per Kg of load. The longer drying cycle and increased flow of ambient temperature air advantageously allow the total energy consumption during the drying cycle to be less than 0.5 kwh/Kg.

One preferred embodiment of the present invention includes a heater for heating the air prior to introduction to the drum, to compensate the incoming air to a predetermined ambient temperature less than 30°C and suitably of the order of 20°C or of the order of 26°C. The heater can be controlled with a thermostat at the desired ambient air temperature, or preferably by using pulsed width modulation. The effective heat output of the heater is varied to maintain constant drying time, and may be dynamically adjusted during the drying cycle. Additionally or alternatively, a maximum drying time is set according to the temperature of the incoming air and/ or the drying cycle is terminated when the load is determined to be dry.

The present invention also extends to a method of operating the tumble dryer defined herein.

It has been found that a high airflow and no heat input provides an alternative mechanism for evaporating water from the load that is much more efficient than the prior art. In the preferred embodiments of the invention the applicants have found that by increasing the airflow of a conventional dryer whilst minimising heater output, it is possible to provide a tumble dryer which is energy efficient, has a low capital cost, and an acceptably low noise level, whilst maintaining a good drying performance.

For a better understanding of the invention, and to show how embodiments of the same may be carried into effect, reference will now be made, by way of example, to the accompanying diagrammatic drawings in which:

Figure 1 is a schematic sectional side view of a tumble dryer;

Figure 2 is a schematic view of a control circuit;

Figure 3 is a flowchart illustrating a first preferred operating method; and

Figure 4 is a flowchart illustrating a second preferred operating method.

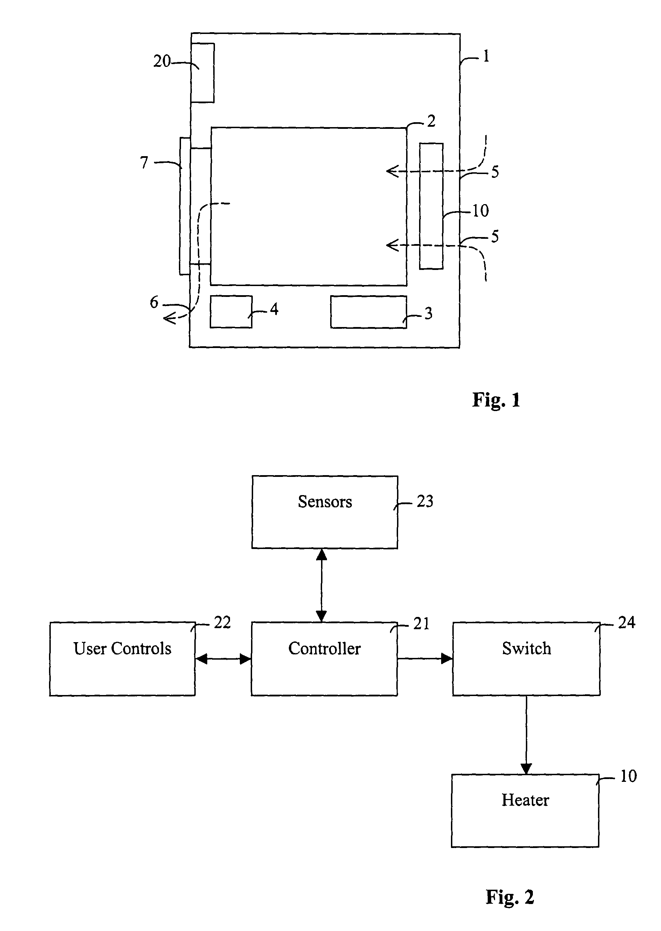

Referring to Figure 1, the preferred embodiment of the present invention relates to an air vented tumble dryer for drying laundry. The basic components of the tumble dryer will be familiar to the skilled person and include a housing 1, a rotatable drum 2 powered by a motor 3, and a fan 4 for providing a flow of air through the drum 2. In the prior art, a heater 10 is provided such that, in use, ambient air drawn into the dryer through air intakes 5 is heated prior to entry into the drum 2. In this example embodiment, the fan 4 is provided after the drum 2 and therefore induces airflow through the drum. In other embodiments the fan 4 is provided prior to the drum 2 and forces airflow therethrough. In each case, spent moisture-laden air exiting the drum 2 is exhausted external to the dryer through an outlet 6. User access to the drum 2 is provided through a hinged door 7 for loading and unloading, and operation of the dryer is controlled by a control arrangement 20. The construction of a condensing dryer is generally similar, except that the spent air from the drum 2 is directed to a condenser (not shown) instead of to the outlet 6. The condenser has a relatively high capital cost and hence an air vented dryer is preferred, but the present invention is applicable to both types of dryer.

In the prior art, the heater 10 raises the temperature of the incoming ambient air to a relatively high predetermined temperature, typically in the region of about 80°C to 120°C. In order to achieve this substantial rise in air temperature, the heater 10 has an energy consumption of the order of 2kW to 3kW. Hence, the heater 10 represents a large proportion of the total energy consumption of the dryer, with the next major item being the motor 3 which has a consumption typically of the order of 200W. In the prior art, efforts have concentrated on making the heater more efficient whilst maintaining the same heat output.

It is desired that the external housing 1 has dimensions of the order of 60cmx60cmx85cm for a tumble dryer sold in Europe for domestic use, although other dimensions are also known. To fit within this standard housing, most tumble dryers use a drum having a volume of the order of 95 to 125 litres. In the prior art, the fan arrangement 4 provides an airflow through the drum 2 of less than 140m$^3$/hr.

In the preferred embodiments of the present invention, the fan 4 provides a significantly increased airflow through the drum 2. Preferably, the increased airflow is maintained throughout the drying cycle, or at least for a substantial period thereof sufficient to achieve drying of the load. Preferably, the airflow is greater than 150m$^3$/hr. Preferably the airflow is greater than 180m$^3$/hr, preferably greater than 200m$^3$/hr, and ideally greater than 250m$^3$/hr. In one preferred embodiment the airflow is approximately 275 to 280m$^3$/hr. Conveniently, the volumetric airflow is measured using a handheld vane anemometer at a suitable point such as the exhaust of the dryer. Alternatively, these airflow measurements can be expressed according to standard International guidelines (e.g. ISO7167/1). These airflows are particularly suited to a typical European drum of around 90 to 125 litres. Other drum volumes are known, particularly for other housing sizes. For example, domestic dryers are known having a drum volume from 60 litres to over 125 litres. The airflow figures are adjusted accordingly for larger or smaller drum volumes, but maintaining a significantly greater airflow. Ideally, the preferred embodiments of the invention provide an airflow that is approximately double the expected value for a prior art dryer.

Although increasing the airflow does lead to a slight increase in the level of operating noise, preferred embodiments of the present invention have an operating noise level of the order of only 2dB greater than a typical prior art dryer. Hence, the significantly increased airflow of the present invention has been found to be less inconvenient than expected.

Advantageously, it has been found that an increased airflow allows the heater 10 to be removed altogether, whilst maintaining a satisfactory drying time for the load. In one preferred embodiment, unheated ambient air of the order of 20°C dries a standard 5Kg load in around eight hours, at the increased airflow discussed above. This preferred embodiment is particularly suitable for use on an "overnight" cycle. The preferred embodiments of the present invention employ a much longer drying cycle than the prior art. Preferably, the drying cycle applies ambient temperature air for at least 1 hour per Kg of load. Ideally the drying cycle provides ambient temperature air for at least 1.25 hours and preferably for at least 1.5 hours per Kg of load. This longer drying time is contrary to the expectations of the prior art which have always sought to shorten the drying cycle.

Importantly, by going against the established conventions of the art, the applicants have found that the total power consumption of the dryer is decreased significantly and the dryer is much more energy efficient compared with the prior art. To illustrate the energy efficiency of the present invention, it is useful to apply the European Union guidelines relating to energy savings in domestic appliances. Laundry dryers are placed into categories "A" to "G" according to energy consumption determined in kilowatt hours per kilogram of dry load (kWh/Kg). An example category limitation is set out in table 1 below. Most commercially available prior art air vented and condensing dryers are declared to be in categories "C" or "D", i.e. having a declared energy consumption greater than 0.59kWh/Kg or 0.64kWh/Kg, respectively. By contrast, preferred embodiments of the present invention have an actual energy consumption well within category "A", i.e. much less than 0.51kWh/Kg. Preferred embodiments of the invention achieve a 50% energy saving compared with the actual energy consumption of most prior art dryers.

Table 1

| (kWh/Kg of dry load) | |
|---|---|
| **air vented** | **condenser** |
| A <=0.51 | A <=0.55 |
| 0.51< B <=0.59 | 0.55< B <=0.64 |
| 0.59< C <=0.67 | 0.64< C <=0.73 |
| 0.67< D <=0.75 | 0.73< D <=0.82 |
| 0.75< E <=0.83 | 0.82< E <=0.91 |
| 0.83< F <=0.91 | 0.91< F <=1.00 |
| G <0.91 | G <1.00 |

Whilst preferred embodiments of the present invention achieve a good drying performance when the ambient air temperature is above about 20°C, it has been found that the drying time increases significantly at lower ambient air temperatures. Hence, in preferred embodiments of the present invention it is desired to compensate the ambient temperature of the incoming airflow.

Referring to Figure 1, a heater 10 is provided for heating the ambient air drawn in through the air intakes 5 prior to introduction to the drum 2. The heater 10 compensates the temperature of the incoming air, raising the temperature of the air to a predetermined temperature, ideally of between about 20°C to 30°C. It will be appreciated that this ambient temperature compensation occurs at much lower temperatures than the prior art. The heater 10 has a much lower overall power consumption, and since the increased airflow and longer drying cycle provide such a large energy saving, it is possible to power the heater 10 to perform ambient temperature compensation whilst remaining within desired total energy consumption limits such as 0.51kWh/Kg for category "A" of the European guidelines.

Any suitable heating arrangement may be employed. The heater may be a gas burner, but in the preferred embodiments of the invention an electrical heating arrangement is employed. For example, the heater may be a positive temperature coefficient heater. In one preferred embodiment, the dryer is provided with a resistive coil or sheathed element heater consuming of the order of 2kW to 3kW when powered. Suitably, in the energy efficient mode the ambient air temperature is compensated to a desired temperature, such as around 20°C, and no higher, in order to avoid wasting energy. In one embodiment, the heater 10 is coupled to a thermostat and is switched off when the air entering the drum 2 is 20°C or more, thereby cycling the heater on and off to give an effective ambient air temperature of around 20°C. However, it has been found that such thermostatic controls are not reliable and have a relatively short operating life span. Therefore, the preferred embodiment of the present invention employs an improved control arrangement which will be described below.

With reference to Figure 2 of the accompanying drawings, the controller 20 comprises a microprocessor unit 21 coupled to a user control panel 22, a set of laundry and machine operation sensors 23 and a power switch 24. The switch 24 determines current flow through the heater 10 and is suitably a relay or a solid state switching device such as a triac. In use, the controller 21 controls the switch 24 either to allow a full operating current to pass through the switch to the heater 10, or to interrupt the current completely. Hence, the heater 10 is either operating at maximum efficiency at a full operating current, or it is turned off. The controller 21 enables a pulsed heating mode to turn the heater on for a first predetermined period and then off for a second predetermined period in a regular repetitive cycle (as opposed to a demand driven cycle of a thermostatic control), such that the overall effective heat output of the heater 10 is adjusted. The controller 21 controls the heater using a continuously variable pulse width modulation to adjust the mark-space ratio for cycling the heater on and off. Therefore, the heater 10 is controlled to have an effective output at any desired level between a minimum level (e.g. 0kW) and a maximum continuously on level (e.g. 2.7kW).

In one preferred embodiment the controller aims to maintain a constant drying time. For example, the length of the drying cycle is a predetermined value between about 6hrs and 8hrs. Conveniently, by compensating the incoming airflow the dryer then takes a roughly constant time to perform the drying cycle irrespective of day to day variations in the incoming air temperature.

In another preferred embodiment, the controller provides a greater degree of compensation where circumstances allow and increases the desired air temperature. In one preferred example, the incoming airflow is compensated to a higher level, suitably around 26°C. This enhanced compensation mode significantly decreases the total drying time, e.g. to about 6hrs for a 5Kg load, whilst maintaining a total energy consumption of less than a desired level, such as, 0.51kWh/Kg, and is particularly useful where the incoming air is already relatively warm, e.g. about 18°C.

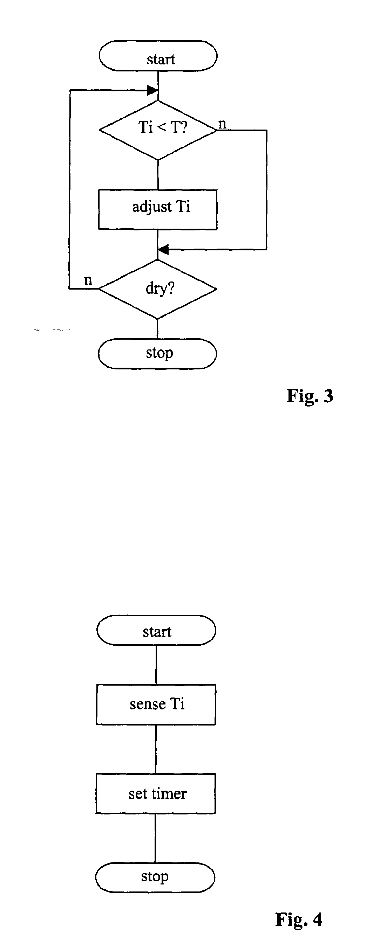

Referring to Figure 3, in one preferred operating mode, the controller 21 determines the temperature of the incoming ambient air in the region of the inlets 5 using the sensors 23. If this incoming temperature is below a desired level, such as 20°C, the controller 21 adjusts the output of the heater 10 in order to compensate for the temperature of the incoming ambient air. In a preferred embodiment the controller applies the following equation:

$$H = (T - T_i)/P \times 100\%$$

where

H is the mark-space ratio of the heater;

T is the desired operating temperature;

$T_i$ is the incoming air temperature; and

P is an equation modifier.

In this simple example, it will be seen that the output of the heater increases linearly as the temperature of the ambient air decreases. In preferred embodiments of the present invention P is a constant selected such that the heater mark-space ratio H is in the range of 0% to a maximum of 30% over the expected operating range of the dryer. Optionally, the heater mark-space ratio H is set to one predetermined value, such as of the order of 3% to 5%, when the incoming air is equal to or above the desired temperature. Other equations can be employed giving, for example, a non-linear relationship, such as by varying P depending on the incoming temperature $T_i$. Optionally, more complicated sensing arrangements can be employed, for example, to sense both incoming and exit air temperatures and apply a power calculation accordingly. In one embodiment, the power output of the heater 10 is set at the beginning of the cycle. In another embodiment the power output H is adjusted dynamically during the drying cycle.

Figure 3 illustrates a preferred operating method. Firstly, the temperature of the incoming ambient air is sensed and compensated as described above. Secondly, the drying operation continues until the load is determined to be dry. Conveniently, the sensors 23 include a sensor for determining the resistance of the load, which is used by the controller 21 to determine the moisture content of the load.

Referring to Figure 4, in another embodiment of the present invention the controller 21 sets a time for the drying operation depending upon the incoming air temperature. For example, at a temperature of 20°C a drying operation is set for eight hours. The length of the drying time is varied accordingly when the sensed incoming air temperature is above or below 20°C. This embodiment is particularly suited for use without any compensatory heating of the incoming airflow.

In a further preferred embodiment of the invention, a dual-mode dryer is provided operable in a first mode where the incoming airflow is heated to a substantial temperature, suitably around 80 to 120°C as in the prior art, and optionally operable in a second energy efficient mode according to any of the embodiments as described herein.

A tumble dryer and method of operating a tumble dryer have been described which, through the use of increased airflow and an increased drying time, provide a greatly improved energy efficient dryer compared with the prior art under the same load conditions. Also, by compensating the incoming ambient air temperature a reasonable drying time is maintained even if the ambient air temperature is less than ideal. Further, the load is dried gently at a relatively low temperature resulting in minimal creasing and minimal damage to fibres.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

**Claims**

1. A tumble dryer comprising a rotatable drum (2) and airflow means (4) for generating an airflow through the drum, **characterised in that** the airflow means (4) is arranged to provide a flow of ambient temperature air through the drum during a drying cycle.

2. A dryer as claimed in claim 1 wherein the airflow means (4) is arranged to maintain the ambient temperature airflow for at least a period of the drying cycle sufficient to achieve substantial drying of a load in the drum (2).

3. A dryer as claimed in claim 1 or 2 wherein the airflow means (4) maintains the ambient temperature airflow substantially throughout the drying cycle.

4. A dryer as claimed in any of claims 1 to 3 wherein the airflow means (4) provides an airflow greater than 150m$^3$/hr; and/or the airflow means (4) applies ambient temperature air for a drying cycle lasting at least 1 hour per Kg of load; and/or the total energy consumption of the dryer during the drying cycle is less than of the order of 0.5kWh per Kg of dry load.

5. A dryer as claimed in any of claims 1 to 4 comprising a heater (10) for heating the airflow prior to introduction to the drum (2), wherein the heater (10) compensates incoming airflow to a predetermined ambient temperature less than 30°C.

6. A dryer as claimed in claim 5 wherein the heater (10) compensates only if the incoming air is below the predetermined ambient temperature.

7. A dryer as claimed in claim 5 or 6 comprising a controller (21) for controlling the heater (10) depending upon the temperature of the incoming airflow, such that the heater (10) has a variable effective heat output controlled by pulse width modulation.

8. A dryer as claimed in claim 7 wherein the controller (21) maintains a constant drying time by varying the effective heat output of the heater.

9. A dryer as claimed in claim 7 or 8 wherein the controller (21) is arranged to terminate operation of the dryer after a maximum time period, the maximum time period being determined according to the temperature of the incoming air.

10. A dryer as claimed in any of claims 7 to 9 wherein the controller (21) applies the following equation:

$$H = (T - T_i)/P \times 100\%$$

where

   H is the mark-space ratio of the heater;

T is the desired operating temperature;

Ti is the incoming air temperature; and

P is a predetermined constant.

**11.** A dryer as claimed in any of claims 1 to 10 wherein the dryer is operable in a first mode where the incoming airflow is heated to a substantial temperature, of the order of 80 to 120°C, and operable in a second energy efficient mode according to any preceding claim.

**12.** A tumble dryer comprising a rotatable drum (2) and airflow means (4) for generating an airflow through the drum, **characterised in that** the airflow means (4) provides a flow of ambient temperature air through the drum of at least 150m$^3$/hr substantially throughout a drying cycle lasting at least 1 hour per Kg of dry load.

**13.** A method of operating a tumble dryer having a rotating drum (2) and airflow means (4) for generating an airflow through the drum, comprising the step of operating the airflow means (4) to provide a flow of ambient temperature air through the drum (2) during a drying cycle.

**14.** A method as claimed in claim 13 wherein the ambient temperature airflow is maintained for at least a period of the drying cycle sufficient to achieve substantial drying of the load.

**15.** A method as claimed in claim 13 or 14 wherein the ambient temperature airflow is maintained substantially throughout the drying cycle.

**16.** A method as claimed in any of claims 13 to 15 wherein the airflow is greater than 150m$^3$/hr, and/or the airflow means applies ambient temperature air for a drying cycle lasting at least 1 hour per Kg of load and/or the total energy consumption of the dryer during a drying cycle is less than of the order of 0.5kWh per Kg of dry load.

**17.** A method as claimed in any of claims 13 to 16 comprising the step of heating (10) the air prior to introduction to the drum (2) in order to compensate the incoming air to a predetermined ambient temperature less than 30°C.

**18.** A method as claimed claim 17 comprising the step of controlling a heater (10) by pulse width modulation to give variable effective heat output depending upon the temperature of the incoming air.

**19.** A method as claimed in claim 18 wherein the controlling step comprises maintaining a constant drying time by varying the effective heat output of the heater (10).

**20.** A method as claimed in any of claims 13 to 19, comprising terminating operation of the dryer after a maximum time period, the maximum time period being determined according to the temperature of the incoming air.

**21.** A method as claimed in any of claims 13 to 20, comprising the steps of operating the dryer in a first mode where the incoming airflow is heated to a substantial temperature, of the order of 80 to 120°C, or operating the dryer in a second energy efficient mode according to any of claims 13 to 20.

**Fig. 1**

**Fig. 2**

start

Ti < T?  n

adjust Ti

n  dry?

stop

**Fig. 3**

start

sense Ti

set timer

stop

**Fig. 4**